# EUROPÄISCHE PATENTANMELDUNG

(11) **EP 3 225 827 A1**
(43) Veröffentlichungstag der Anmeldung: **04.10.2017**
(21) Anmeldenummer: 17161764.0
(22) Anmeldetag: 20.03.2017
(51) Int. Cl.: F02M 21/02, F02M 51/06

(54) **GASVENTIL ZUM ZUFÜHREN EINES GASFÖRMIGEN KRAFTSTOFFS IN DEN ANSAUGTRAKT EINER BRENNKRAFTMASCHINE**

(30) Priorität: 30.03.2016 DE 102016205220
(71) Anmelder: Robert Bosch GmbH, 70442 Stuttgart (DE)
(72) Erfinder: Wiedmann, Felix, 70469 Stuttgart (DE)

(57) **Zusammenfassung**

Die Erfindung betrifft ein Gasventil (10) zum Zuführen eines gasförmigen Kraftstoffs in den Ansaugtrakt einer Brennkraftmaschine, mit einem Magnetaktuator (29), der eine Magnetspule (30) und einen mit der Magnetspule (30) zusammenwirkenden Anker (25) aufweist, mit einem Ventilelement (12), in dem ein vorzugsweise konzentrisch zu einer Längsachse (18) angeordneter, ringförmiger Durchlassbereich (42) für den gasförmigen Kraftstoff zwischen einer Gaszuführung (45) und einem Gasauslass (46) ausgebildet ist, wobei der Durchlassbereich (42) von einem radial inneren und einem radial äußeren Dichtbereich (38, 39) auf der dem Anker (25) zugewandten Seite begrenzt ist, wobei die beiden Dichtbereiche (38, 39) mit einem Schließelement zusammenwirken, das zumindest mittelbar mit dem Anker (25) verbunden ist, und wobei zwei Strömungswege (51, 52) ausgebildet sind, ein erster Strömungsweg (51), der die Gaszuführung (45) mit dem radial inneren Dichtbereich (38) verbindet, und ein zweiter Strömungsweg (52), der die Gaszuführung (45) mit dem radial äußeren Dichtbereich (39) verbindet.

## Beschreibung

### Stand der Technik

Die Erfindung betrifft ein Gasventil zum Zuführen eines gasförmigen Kraftstoffs in den Ansaugtrakt einer Brennkraftmaschine nach dem Oberbegriff des Anspruchs 1.

Aus der US 8,272,399 B2 ist ein Gasventil nach dem Oberbegriff des Anspruchs 1 bekannt. Das bekannte Gasventil weist ein scheibenförmiges Ventilelement auf, das in einem Ventilgehäuse eingesetzt ist. In dem Ventilelement sind auf der einem mit dem Ventilelement zusammenwirkenden Schließelement zugewandten Seite zwei radial umlaufende äußere Ringnuten ausgebildet. Weiterhin ist radial innerhalb der beiden äußeren Ringnuten in dem Ventilelement ein radial umlaufender Durchlassbereich vorgesehen, der den Bereich einer Gaszuführung des Gasventils mit dem Bereich einer Gasausleitung im Bereich des Ansaugtrakts der Brennkraftmaschine verbindet. Die Ringnuten sowie der Durchlassbereich sind von dem in etwa scheibenförmigen Schließelement je nach dessen Position entweder überdeckt bzw. abgedichtet oder aber freigegeben. Zur Betätigung des Schließelements ist dieses mit einem durch eine Magnetspule betätigbaren Magnetanker verbunden. In dem Schließelement sind darüber hinaus zwei Strömungswege ausgebildet, die es ermöglichen, bei von dem Ventilelement abgehobenem Schließelement den Durchlassbereich radial von außen und radial von innen her mit Gas zu versorgen. Dadurch, dass das Schließelement und der Anker als separate Bauteile ausgebildet sind und in dem Schließelement die Strömungswege ausgebildet sind, ist das bekannte Gasventil relativ aufwändig ausgebildet. Darüber hinaus ist die Baugröße durch die in axialer Richtung miteinander verbundenen Bauteile des Ankers und des Schließelements relativ groß.

Aus der WO2006/111987A1 ist ein weiteres Gasventil nach dem Oberbegriff des Anspruchs 1 bekannt. Bei diesem Gasventil wird ein scheiben- bzw. plattenförmiger Anker verwendet, der gleichzeitig ein Schließelement ausbildet, wobei der Anker radial in einem Ventilgehäuse zentriert ist und eine mittig ausgebildete Durchgangsöffnung aufweist, über die der in dem Ventilelement ausgebildete Durchlassbereich radial von innen her mit Gas durchströmbar ist. Bei diesem bekannten Gasventil bildet somit der Anker einen Teil des Strömungswegs aus, wobei der Strömungsweg die Verbindung der Gaszuführung mit dem radial inneren Dichtbereich des Durchlassbereichs herstellt. Als problematisch wird bei diesem Gasventil die Führung des Ankers mittels eines den Anker radial umfassenden, elastischen Führungsrings angesehen, der in dem Ventilgehäuse an seinem Außenumfang aufgenommen ist. Insbesondere besteht bei einer derartigen Führung die Gefahr des Verkippens des Ankers zu dem Ventilelement und somit die Gefahr von Undichtigkeiten.

### Offenbarung der Erfindung

Ausgehend von dem dargestellten Stand der Technik liegt der Erfindung die Aufgabe zugrunde, ein Gasventil zum Zuführen eines gasförmigen Kraftstoffs in den Ansaugtrakt einer Brennkraftmaschine nach dem Oberbegriff des Anspruchs 1 derart weiterzubilden, dass der Anker konstruktiv gesehen möglichst einfach ausgebildet ist. Insbesondere soll es durch eine entsprechende konstruktive Gestaltung des Gasventils ermöglicht werden, dass die Gaszuführung in den Bereich der beiden Dichtbereiche am Ventilelement es nicht erforderlich macht, den Anker durch Ausbildung von Strömungswegen relativ aufwändig auszubilden.

Diese Aufgabe wird erfindungsgemäß bei einem Gasventil zum Zuführen eines gasförmigen Kraftstoffs in den Ansaugtrakt einer Brennkraftmaschine mit den Merkmalen des Anspruchs 1 gelöst.

Der Erfindung liegt die Idee zugrunde, sämtliche der Gasführung erforderlichen Strömungswege ausschließlich in dem Ventilelement auszubilden. Dadurch dient der Anker ausschließlich der Abdichtung der beiden, den Durchlassbereich radial begrenzenden Dichtbereiche am Ventilelement und muss keine zusätzlichen Aufgaben übernehmen. Dies ermöglicht es, einen besonders einfachen, kompakt bauenden und relativ wenig Gewicht aufweisenden Anker ausbilden zu können.

Vorteilhafte Weiterbildungen des erfindungsgemäßen Gasventils sind in den Unteransprüchen aufgeführt.

In konstruktiv bevorzugter Ausgestaltung des ersten Strömungswegs weist dieser einen radial außerhalb des radial äußeren Dichtbereichs am Ventilelement angeordneten ersten Gaszuströmbereich sowie einen radial innerhalb des radial inneren Dichtbereichs am Ventilelement angeordneten zweiten Gaszuströmbereich auf. Die beiden Gaszuströmbereiche sind mittels einer auf der den beiden Dichtbereichen am Ventilelement abgewandten Seite ausgebildeten Verbindung miteinander verbunden.

Um einerseits symmetrische Zuströmverhältnisse zu dem radial inneren Dichtbereich am Durchlassbereich zu ermöglichen, und andererseits einen relativ großen Strömungsquerschnitt zur Gaszuführung zu ermöglichen, ist es in Weiterbildung des zuletzt gemachten Vorschlags bevorzugt vorgesehen, dass der erste Gaszuströmbereich und der zweite Gaszuströmbereich des ersten Strömungswegs jeweils mehrere, vorzugsweise in gleichgroßen Winkelabständen um die Längsachse des Ventilelements angeordnete Gaseinlässe und Gasauslässe aufweist, und dass die Verbindung zwischen den Gaseinlässen und den Gasauslässen radial verlaufende Verbindungskanäle aufweist, die wenigstens einen Gaseinlass mit wenigstens einem Gasauslass verbinden.

Um insbesondere in Verbindung mit den radial verlaufenden Verbindungskanälen einen möglichst kurzen Strömungsweg für das Gas von dem Durchlassbereich in Richtung des Auslassbereiches des Gasventils zu ermöglichen, ist es vorgesehen, dass vom ringförmigen Durchlassbereich auf der dem Schließelement bzw. Anker abgewandten Seite mehrere, vorzugsweise in gleichgroßen Winkelabständen um die Längsachse des Ventilelements angeordnete Abströmkanäle ausgehen, die parallel zur Längsachse des Ventilelements verlaufen.

In ganz besonders bevorzugter konstruktiver Ausbildung des Ventilelements dient dieses zusätzlich der radialen Führung des als Schließelement für den Durchlassbereich im Ventilelement dienenden Ankers. Hierzu ist es vorgesehen, dass der Anker mit einer radial umlaufenden Dichtfläche mit den beiden Dichtbereichen am Ventilelement zusammenwirkt. Weiterhin weist das Ventilelement eine konzentrisch zur Längsachse ausgebildete Bohrung auf, deren Innendurchmesser der radialen Führung eines am Anker ausgebildeten, in die Bohrung hineinragenden Fortsatzes dient.

Zu weiteren Gewichtsreduzierung des Ankers und somit zur Verbesserung des dynamischen Verhaltens des Ankers ist es vorgesehen, dass der Anker eine konzentrisch zur Längsachse ausgebildete Sacklochbohrung aufweist, die von der der Magnetspule zugewandten Seite ausgeht.

Zumindest bei der Montage des Gasventils, ggf. jedoch auch während des Einsatzes in einem Kraftfahrzeug ist es wichtig, den Hub des Ankers genau einzustellen bzw. zu kennen. Hierzu ist es in einer Weiterbildung der Erfindung vorgesehen, dass die Bohrung in dem Ventilelement als Durchgangsbohrung ausgebildet ist, und dass die dem Anker abgewandten Seite der Durchgangsbohrung dazu ausgebildet ist, mittels eines Dichtelements pneumatisch abgedichtet zu werden oder ein Hubsensorelement aufzunehmen. Im ersten Fall ist es somit möglich, während der Montage des Ankers in dem Gasventil bzw. dem Ventilelement durch die Durchgangsbohrung hindurch den Hub des Ankers zu detektieren und ggf. einzustellen. Nach der Einstellung des Ankerhubs wird die Durchgangsbohrung beispielsweise mit einer Verschlussschraube verschlossen und dadurch pneumatisch abgedichtet. Alternativ oder zusätzlich kann es auch vorgesehen sein, dass die Durchgangsbohrung der Aufnahme eines Hubsensorelements dient, dessen Eingangssignal beispielsweise während des Fahrbetriebs zur Ansteuerung der Magnetspule bzw. des Ankers dienen kann.

Ein soweit beschriebenes Ventilelement mit seinen beiden Strömungswegen lässt sich herstellungstechnisch besonders einfach und kostengünstig herstellen, wenn dieses entweder durch ein generatives Herstellungsverfahren, wie 3D-Drucken, oder als Gußteil ausgebildet ist. Dabei ist es ggf. lediglich erforderlich, die beiden Dichtbereiche (sowie ggf. die Bohrung zur radialen Führung des Ankers) spanend zu bearbeiten. Dies kann ggf. in einem einzigen Arbeitsschritt durch ein entsprechend ausgebildetes Werkzeug erfolgen.

Das soweit beschriebene Ventilelement eignet sich insbesondere dazu, in einem Ventilgehäuse eingesetzt zu werden. Hierzu weist das Ventilgehäuse eine entsprechend ausgebildete Aufnahme auf. Eine derartige Ausbildung ermöglicht es insbesondere, das Ventilgehäuse beispielsweise ausschließlich durch einen spanenden oder aber durch einen von der Herstellung des Ventilelements abweichenden spanlosen Herstellprozess ausbilden zu können, um somit insgesamt gesehen ein aus fertigungstechnischer Sicht sowie aus Kostensicht optimiertes Gasventil ausbilden zu können.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1: ein Gasventil zum Zuführen eines gasförmigen Kraftstoffs in den Ansaugtrakt einer Brennkraftmaschine in einem vereinfachten Längsschnitt,
- Fig. 2: das bei dem Gasventil gemäß Fig. 1 verwendete Ventilelement in einer gegenüber Fig. 1 anderen Drehwinkelposition,
- Fig. 3: einen Teilbereich des Ventilelements gemäß der Fig. 2 im Bereich seines ringförmigen Durchlassbereichs in vergrößerter Darstellung und
- Fig. 4: eine Draufsicht auf das Ventilelement der Fig. 2 in Richtung des Pfeils IV in der Fig. 2.

Gleiche Elemente bzw. Elemente mit gleicher Funktion sind in den Figuren mit den gleichen Bezugsziffern versehen.

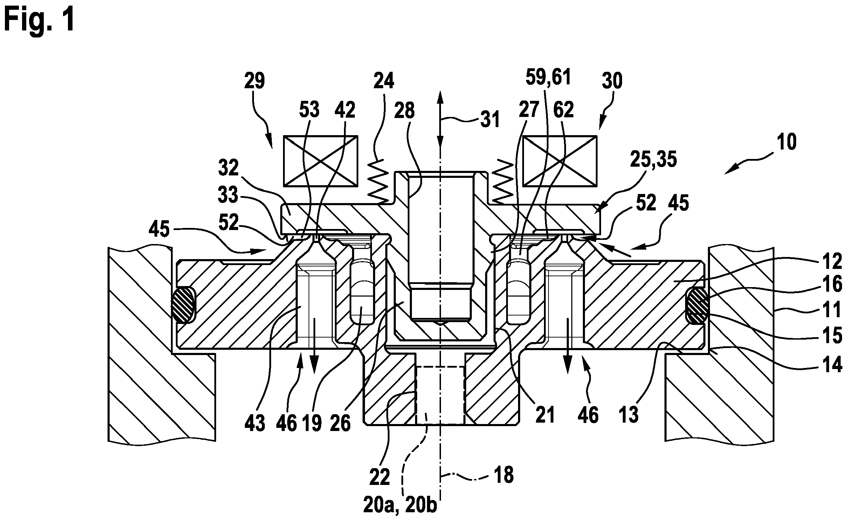

Das in der Fig. 1 ausschnittsweise dargestellte Gasventil 10 dient zum Zuführen bzw. Einblasen eines gasförmigen Kraftstoffs in den Ansaugtrakt einer Brennkraftmaschine. Unter einem gasförmigen Kraftstoff wird im Rahmen der Erfindung insbesondere, jedoch nicht einschränkend, Erdgas oder Wasserstoff verstanden.

Das Gasventil 10 weist ein Ventilgehäuse 11 auf, das in den ansonsten nicht gezeigten Ansaugtrakt der Brennkraftmaschine einsetzbar ist. Das Ventilgehäuse 11 dient der Aufnahme eines im Wesentlichen zylindrisch ausgebildeten Ventilelements 12, das beispielsweise im Bereich einer Stufe 13 einer Aufnahme 14 des Ventilgehäuses 11 axial anliegt. Radial ist das Ventilelement 12 zum Ventilgehäuse 11 über einen in einer radial umlaufenden Ringnut 15 des Ventilelements 12 angeordneten Dichtring 16 abgedichtet.

Das Ventilelement 12 weist eine Längsachse 18 auf, in der eine Bohrung in Form einer Durchgangsbohrung 19 ausgebildet ist. Die Durchgangsbohrung 19 weist zwei Bohrungsabschnitte 21, 22 mit unterschiedlichem Innendurchmesser auf. Der einen geringeren Innendurchmesser aufweisende Bohrungsabschnitt 22 weist beispielsweise eine nicht gezeigte Gewindebohrung auf, derart, dass der Bohrungsabschnitt 22 mittels eines lediglich symbolisch dargestellten Verschlusselements 20a, beispielsweise einer Dichtschraube, pneumatisch abgedichtet werden kann. Alternativ dient der zweite Bohrungsabschnitt 22 der Aufnahme bzw. Positionierung eines ebenfalls lediglich symbolisch dargestellten Hubsensors 20b.

Der Innendurchmesser des ersten Bohrungsabschnitts 21 dient der radialen Führung eines Magnetankers 25. Hierzu weist der Magnetanker 25 einen in den zweiten Bohrungsabschnitt 22 axial hineinragenden Fortsatz 26 auf, der einen im Durchmesser vergrößerten, radial umlaufenden Führungsbereich 27 hat, der sich lediglich über einen Teilbereich der axialen Länge des Fortsatzes 26 erstreckt, und der radial an dem Innendurchmesser des ersten Bohrungsabschnitts 21 anliegt. Radial außerhalb des ersten Bohrungsabschnitts 21 ist der Magnetanker 25 zumindest im Wesentlichen scheibenförmig ausgebildet. Weiterhin weist der Magnetanker 25 auf der dem zweiten Bohrungsabschnitt 22 abgewandten Seite zur Gewichtsersparnis eine Sacklochbohrung 28 auf.

Der Magnetanker 25 wirkt mit einer lediglich schematisch dargestellten Magnetspule 30 zusammen, die insgesamt einen Magnetaktuator 29 ausbilden.

Bei einer Bestromung der Magnetspule 30 erfolgt eine Bewegung des Magnetankers 25 in Richtung des Doppelpfeils 31 entlang der Längsachse 18. Der Magnetanker 25 wirkt mit einer Druckfeder 24 zusammen, die den Magentanker 25 in Richtung des Ventilelements12 kraftbeaufschlagt. Der Magnetanker 25 weist in seinem scheibenförmigen Bereich 32 auf der der Magnetspule 30 abgewandten Seite im Bereich einer ringförmigen Vertiefung 34 eine radial umlaufende Dichtfläche 33 auf. Gleichzeitig wirkt der Magnetanker 25 als Schließelement 35 zur Abdichtung bzw. zum Freigeben zweier, am Ventilelement 12 in Überdeckung mit der Dichtfläche 33 angeordneter Dichtbereiche 38, 39. Bei nichtbestromter Magnetspule 30 liegt die Dichtfläche 33 des Magnetankers 25 an den beiden Dichtbereichen 38, 39 aufgrund der Federkraft der Druckfeder 24 an und dichtet diese ab.

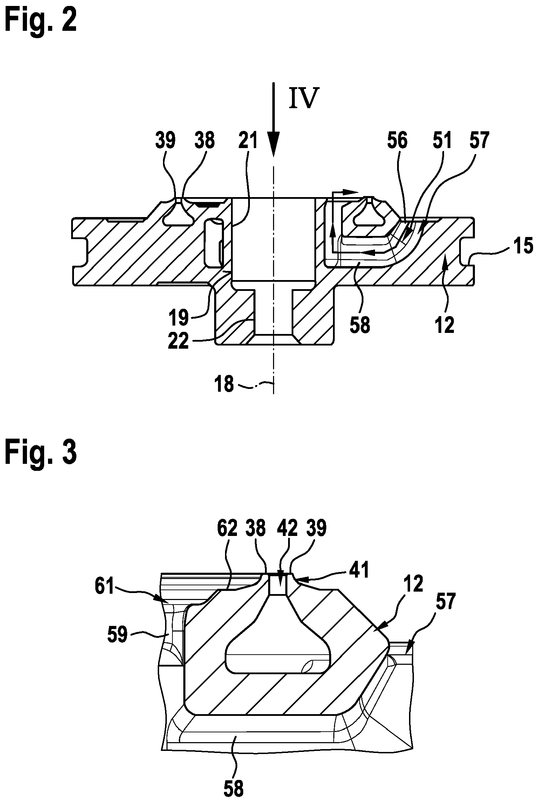

Die beiden Dichtbereiche 38, 39 sind auf der dem scheibenförmigen Bereich 32 des Magnetankers 25 zugewandten Seite im Bereich einer radial umlaufenden, ringförmigen Erhebung 41 ausgebildet, wie besonders deutlich anhand der Fig. 3 erkennbar ist. Zwischen den beiden Dichtbereichen 38, 39 verläuft im Ventilelement 12 über einen Teilbereich seiner axialen Höhe ein ringförmiger Durchlassbereich 42. Vom Grund des Durchlassbereichs 42 gehen mehrere um die Längsachse 18 angeordnete und parallel zueinander ausgerichtete Abströmkanäle 43 aus. Der eine Dichtbereich 38 ist in Bezug auf die Längsachse 18 bzw. den Durchlassbereich 42 als radial äußerer Dichtbereich 38 ausgebildet, während der andere Dichtbereich 39 einen radial inneren Dichtbereich 39 ausbildet. Bei einer Bestromung der Magnetspule 30 hebt der Magnetanker 25 mit seiner Dichtfläche 33 von den beiden Dichtbereichen 38, 39 des Ventilelements 12 ab und ermöglicht damit ein Durchströmen des Durchlassbereichs 42 und der Abströmkanäle 43 mit Gas. Dadurch wird der Bereich einer im Einzelnen im Ventilgehäuse 11 ausgebildeten, nicht gezeigten Gaszuführung 45 mit einem in Wirkverbindung mit den Abströmkanälen 43 angeordneten Gasauslass 46 verbunden, die im Bereich des Ansaugtrakts der Brennkraftmaschine mündet.

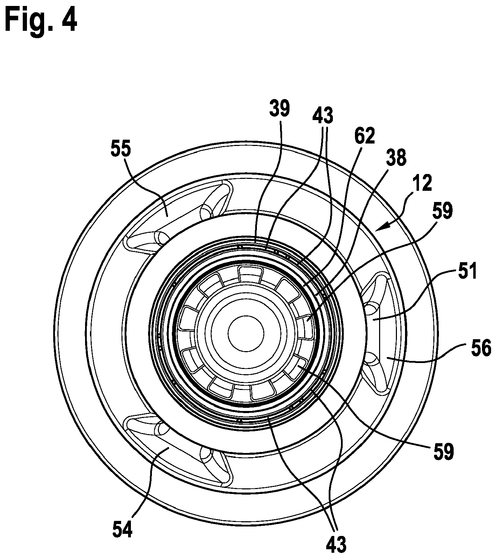

Das Einströmen von Gas in den ringförmigen Durchlassbereich 42 des Ventilelements 12 durch Freigeben der beiden Dichtbereiche 38, 39 erfolgt durch Ausbildung zweier Strömungswege 51, 52. Der erste Strömungsweg 51 verbindet den Bereich der Gaszuführung 45 mit dem radial inneren Dichtbereich 38, während der zweite Strömungsweg 52 den Bereich der Gaszuführung 45 mit dem radial äußeren Dichtbereich 39 verbindet. Während die Ausbildung des zweiten Strömungswegs 52 durch Zuströmen von Gas über den Axialspalt 53 zwischen der dem Magnetanker 25 zugewandten Oberseite des Ventilelements 12 und dem scheibenförmigen Bereich 32 des Magnetankers 25 erfolgt, wird der erste Strömungsweg 51 durch Ausnehmungen am Ventilelement 12 ausgebildet. Hierzu ist es vorgesehen, dass der erste Strömungsweg 51 beispielhaft drei, in gleichmäßigen Winkelabständen um die Längsachse 18 angeordnete Gaseinlässe 54 bis 56 aufweist, die insgesamt gesehen einen ersten Gaszuströmbereich 57 ausbilden. Die Gaseinlässe 54 bis 56 sind insbesondere anhand der Fig. 2 und 4 erkennbar. Die Gaseinlässe 54 bis 56 gehen jeweils in einen radial in Bezug zur Längsachse 18 angeordneten sowie senkrecht zur Längsachse 18 verlaufenden Verbindungskanal 58 über, der wiederum zu wenigstens einem, vorzugsweise jedoch mehreren Gasauslässen 59 Verbindung hat. Die in gleichgroßen Winkelabständen in Bezug zur Längsachse 18 angeordneten, und in den Fig. 2 und 4 erkennbaren Gasauslässe 59 bilden insgesamt einen zweiten Gaszuströmbereich 61 aus, der auf der den Verbindungskanälen 58 abgewandten Seite radial innerhalb des radial inneren Dichtbereichs 39 mündet, wobei zwischen dem Ventilelement 12 und dem scheibenförmigen Bereich 32 des Magnetankers 25 zwischen dem Gasauslassbereich 61 und dem Dichtbereich 39 eine radial umlaufende Vertiefung 62 ausgebildet ist, die unmittelbar bis an den Dichtbereich 39 am Ventilelement 12 heranreicht.

Das soweit beschriebene Gasventil 10 kann in vielfältiger Art und Weise abgewandelt bzw. modifiziert werden, ohne vom Erfindungsgedanken abzuweichen.

## Patentansprüche

1. Gasventil (10) zum Zuführen eines gasförmigen Kraftstoffs in den Ansaugtrakt einer Brennkraftmaschine, mit einem Magnetaktuator (29), der eine Magnetspule (30) und einen mit der Magnetspule (30) zusammenwirkenden Anker (25) aufweist, mit einem Ventilelement (12), in dem ein vorzugsweise konzentrisch zu einer Längsachse (18) angeordneter, ringförmiger Durchlassbereich (42) für den gasförmigen Kraftstoff zwischen einer Gaszuführung (45) und einem Gasauslass (46) ausgebildet ist, wobei der Durchlassbereich (42) von einem radial inneren und einem radial äußeren Dichtbereich (38, 39) auf der dem Anker (25) zugewandten Seite begrenzt ist, wobei die beiden Dichtbereiche (38, 39) mit einem Schließelement zusammenwirken, das zumindest mittelbar mit dem Anker (25) verbunden ist, und wobei zwei Strömungswege (51, 52) ausgebildet sind, ein erster Strömungsweg (51), der die Gaszuführung (45) mit dem radial inneren Dichtbereich (38) verbindet, und ein zweiter Strömungsweg (52), der die Gaszuführung (45) mit dem radial äußeren Dichtbereich (39) verbindet,
**dadurch gekennzeichnet,**
**dass** beide Strömungswege (51, 52) am oder im Ventilelement (12) ausgebildet sind.

2. Gasventil nach Anspruch 1,
**dadurch gekennzeichnet,**
**dass** der erste Strömungsweg (51) einen radial außerhalb des äußeren Dichtbereichs (39) angeordneten ersten Gaszuströmbereich (57) und einen radial innerhalb des radial inneren Dichtbereichs (38) angeordneten zweiten Gaszuströmbereich (61) aufweist, und dass der erste Gaszuströmbereich (57) und der zweite Gaszuströmbereich (61) mittels einer auf der den beiden Dichtbereichen (38, 39) abgewandten Seite ausgebildeten Verbindung miteinander verbunden sind.

3. Gasventil nach Anspruch 2,
**dadurch gekennzeichnet,**
**dass** der erste Gaszuströmbereich (57) und der zweite Gaszuströmbereich (61) jeweils mehrere, vorzugsweise in gleichgroßen Winkelabständen um die Längsachse (18) angeordnete Gaseinlässe (54 bis 56) und Gasauslässe (59) aufweist, und dass die Verbindung in Bezug zur Längsachse (18) radial verlaufende Verbindungskanäle (58) aufweist, die wenigstens einen Gaseinlass (54 bis 56) mit wenigstens einem Gasauslass (59) verbinden.

4. Gasventil nach einem der Ansprüche 1 bis 3,
**dadurch gekennzeichnet,**
**dass** vom ringförmigen Durchlassbereich (42) auf der dem Schließelement (35) abgewandten Seite mehrere, vorzugsweise in gleichgroßen Winkelabständen um die Längsachse (18) abgeordnete Abströmkanäle (43) ausgehen, die parallel zur Längsachse (18) verlaufen.

5. Gasventil nach einem der Ansprüche 1 bis 4,
**dadurch gekennzeichnet,**
**dass** das Schließelement (35) durch den Anker (25) gebildet ist, der mit einer radial umlaufenden Dichtfläche (33) mit den beiden Dichtbereichen (38, 39) zusammenwirkt, und dass das Ventilelement (12) eine konzentrisch zur Längsachse (18) ausgebildete Bohrung (19) aufweist, deren Innendurchmesser zur radialen Führung eines am Anker (25) ausgebildeten, in die Bohrung (19) hineinragenden Fortsatzes (26) dient.

6. Gasventil nach Anspruch 5,
**dadurch gekennzeichnet,**
**dass** der Anker (25) eine konzentrisch zur Längsachse (18) ausgebildete Sacklochbohrung (28) aufweist, die von der der Magnetspule (30) zugewandten Seite ausgeht.

7. Gasventil nach Anspruch 5 oder 6,
**dadurch gekennzeichnet,**
**dass** die Bohrung (19) als Durchgangsbohrung ausgebildet ist, und dass die dem Anker (25) abgewandte Seite der Durchgangsbohrung dazu ausgebildet ist, mittels eines Verschlusselements (20a) pneumatisch abgedichtet zu werden oder ein Hubsensorelement (20b) aufzunehmen.

8. Gasventil nach einem der Ansprüche 1 bis 7,
**dadurch gekennzeichnet,**
**dass** das Ventilelement (12) als ein durch ein generatives Herstellverfahren ausgebildetes Bauteil oder als Gußteil ausgebildet ist, und dass zumindest die Dichtbereiche (38, 39) durch einen spanenden Arbeitsschritt erzeugt sind.

9. Gasventil nach einem der Ansprüche 1 bis 8,
**dadurch gekennzeichnet,**
**dass** das Ventilelement (12) zumindest im Wesentlichen zylindrisch ausgebildet und eine Aufnahme (14) eines Ventilgehäuses (11) eingesetzt ist.

10. Gasventil nach einem der Ansprüche 1 bis 9,
**dadurch gekennzeichnet,**
**dass** der Durchlassbereich (42) im Bereich einer radial umlaufenden Erhebung (41) des Ventilelements (12) auf der dem Anker (25) zugewandten Seite ausgebildet ist, und dass der Anker (25) eine ringförmige Vertiefung (34) aufweist, in deren Bereich eine Dichtfläche (33) ausgebildet ist, die mit den beiden Dichtbereichen (38, 39) am Ventilelement (12) zusammenwirkt.
